# EUROPEAN PATENT APPLICATION

(11) **EP 3 829 256 A1**
(43) Date of publication of application: **02.06.2021**
(21) Application number: 19843875.6
(22) Date of filing: 08.04.2019
(51) Int. Cl.: H04W 74/08, H04W 74/00

(54) **INFORMATION TRANSMISSION METHOD AND DEVICE, AND COMPUTER STORAGE MEDIUM**

(30) Priority: 03.08.2018 CN 201810875807
(71) Applicant: GUANGDONG OPPO MOBILE TELECOMMUNICATIONS CORP., LTD., Dongguan Guangdong 523860 (CN)
(72) Inventor: SHI, Cong, Dongguan, Guangdong 523860 (CN); XU, Weijie, Dongguan, Guangdong 523860 (CN); LU, Qianxi, Dongguan, Guangdong 523860 (CN); YOU, Xin, Dongguan, Guangdong 523860 (CN)
(74) Representative: Manitz Finsterwald Patent- und Rechtsanwaltspartnerschaft mbB
(86) International application number: PCT/CN2019/081781
(87) International publication number: WO 2020/024611

(57) **Abstract**

Disclosed in the embodiments of the present application are an information transmission method and device, and a computer storage medium. Said method may comprise: selecting from at least one alternative uplink resource an uplink resource for sending a message; the uplink resource comprising a physical uplink control channel (PUCCH) resource and/or a physical uplink shared channel (PUSCH) resource; and using the selected uplink resource to transmit a message to be sent.

## Description

### TECHNICAL FIELD

Embodiments of the application relate to the technical field of wireless communication, and particularly to an information transmission method, a device and a computer storage medium.

### BACKGROUND

At present, a wireless communication system may be a multiple access system capable of sharing available system resources (for example, time, frequency and power) to support communication with multiple users. As an example, a wireless multiple access communication system may include a plurality of base stations, each base station supports communication of multiple communication devices, and these communication devices may be additionally called User Equipment (UE). The base station may communicate with the communication device on a downlink channel (for example, for transmission from the base station to the UE) and an uplink channel (for example, for transmission from the UE to the base station).

In some wireless communication systems, for example, a Long Term Evolution (LTE) system, or a 5th Generation (5G) system or a New Radio (NR) system, a wireless device may implement system access through a Random Access Channel (RACH) process. At present, an existing RACH process may include a contention-based RACH process and a contention-free RACH process. For implementing a contention-based RACH process, a 4-message RACH procedure is adopted at present. An expected delay of the present 4-message RACH procedure usually reaches 40 milliseconds (ms), resulting in inadaptability of the present 4-message RACH procedure to a requirement of a low-delay service in a 5G system or an NR system. For solving the problem, replacing the present 4-message RACH procedure with a 2-message RACH procedure is proposed in a related art. However, in a present 2-message RACH procedure, How UE selects an uplink transmission resource to transmit a content required to be transmitted is a problem that needs to be solved.

### SUMMARY

The embodiments of the application provide an information transmission method, a device and a computer storage medium, which may determine a selected uplink transmission resource for UE when an uplink message is transmitted, thereby implementing a 2-message RACH procedure and reducing a delay in a RACH process.

The technical solutions of the embodiments of the application are implemented as follows.

A first aspect provides an information transmission method, which may be applied to UE and include the following operations. An uplink resource for transmitting a message is selected from one or more candidate uplink resources, the uplink resources include at least one of a Physical Uplink Control Channel (PUCCH) resource or a Physical Uplink Shared Channel (PUSCH) resource.

A message to be sent is transmitted by use of the selected uplink resource.

A second aspect provides UE, which may include a selection portion and a transmission portion. The selection portion may be configured to select an uplink resource for transmitting a message from one or more candidate uplink resources, the uplink resources include at least one of a PUCCH resource or a PUSCH resource.

The transmission portion may be configured to transmit a message to be sent by use of the selected uplink resource.

A third aspect provides UE, which may include a network interface, a memory and a processor. The network interface may be configured to receive and send a signal in a process of receiving and sending information with another external network element. The memory may be configured to store computer programs capable of running in the processor. The processor may be configured to run the computer programs to execute the steps of the method of the first aspect.

A fourth aspect provides a computer storage medium, which may store information transmission programs, the information transmission programs are executed by at least one processor to implement the steps of the information transmission method of the first aspect.

Through the technical solutions, under the condition that the UE has yet not accessed a network device, a proper uplink resource may be selected to transmit the message to be sent. Therefore, a 2-message RACH procedure may be implemented, and a delay in a RACH process may be reduced.

### BRIEF DESCRIPTION OF THE DRAWINGS

FIG. 1 is an example diagram of a wireless communication system according to an embodiment of the application.
FIG. 2 is a flowchart of a 4-message RACH procedure in the related art.
FIG. 3 is a flowchart of a 2-message RACH procedure according to an embodiment of the application.
FIG. 4 is a flowchart of an information transmission method according to an embodiment of the application.
FIG. 5 is a flowchart of a first example according to an embodiment of the application.
FIG. 6 is a flowchart of a second example according to an embodiment of the application.
FIG. 7 is a structure diagram of UE according to an embodiment of the application.
FIG. 8 is a structure diagram of other UE according to an embodiment of the application.
FIG. 9 is a specific hardware structure diagram of UE according to an embodiment of the application.

### DETAILED DESCRIPTION

The technical solutions in the embodiments of the application will be described below in combination with the drawings in the embodiments of the application. It is apparent that the described embodiments are not all embodiments but part of embodiments of the application. All other embodiments obtained by those of ordinary skill in the art based on the embodiments in the application without creative work shall fall within the scope of protection of the application.

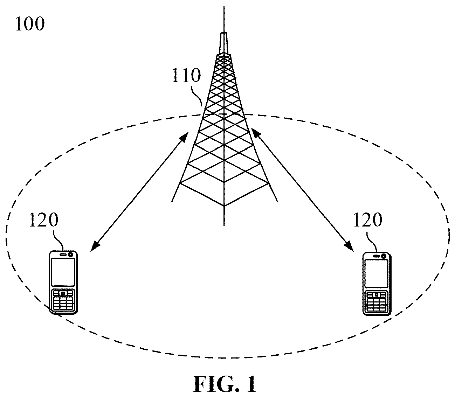

Referring to FIG. 1, an example of a wireless communication system 100 that may be adopted to reduce a delay in a RACH process in wireless communication according to an embodiment of the application is shown. The communication system 100 may include a network device 110, and the network device 110 may be a device communicating with a terminal device 120 (or called a communication terminal and a terminal). The network device 110 may provide a communication coverage for a specific geographical region and may communicate with a terminal device located in the coverage. Optionally, the network device 110 may be a Base Transceiver Station (BTS) in a Global System for Mobile communications (GSM) or a Code Division Multiple Access (CDMA) system, may also be a NodeB (NB) in a Wideband Code Division Multiple Access (WCDMA) system, and may further be an Evolutional Node B (eNB or eNodeB) in an LTE system or a wireless controller in a Cloud Radio Access Network (CRAN). Or the network device may be a mobile switching center, a relay station, an access point, a vehicle device, a wearable device, a hub, a switch, a network bridge, a router, a network-side device or 5G base station (gNB) in a 5G network, a network device in a future evolved Public Land Mobile Network (PLMN) or the like.

The communication system 100 further includes at least one terminal device 120 within the coverage of the network device 110. The "terminal device" used herein includes, but not limited to, a device configured to receive/send a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another communication terminal, and/or an Internet of Things (IoT) device. The terminal device configured to communicate through a wireless interface may be called a "wireless communication terminal", a "wireless terminal" or a "mobile terminal." Examples of a mobile terminal include, but not limited to, a satellite or cellular telephone, a Personal Communication System (PCS) terminal capable of including a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, UE, a user unit, a user station, a mobile station, a mobile radio station, a remote station, a remote terminal, a mobile device , a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, the terminal device 120 may perform Device to Device (D2D) communication.

Optionally, the 5G system or the 5G network may also be called an NR system or an NR network.

A network device and two terminal devices are exemplarily shown in FIG. 1. Optionally, the communication system 100 may include multiple network devices and another number of terminal devices may be included in coverage of each network device. No limits are made thereto in the embodiments of the application.

For the wireless communication system 100 shown in FIG. 1, the terminal device 120 may have a requirement of accessing the network device 110, thereby triggering a RACH process. For example, events triggering the RACH process may include, but not limited to, the following conditions: the condition that the terminal device 120 initially accesses the wireless communication system 100, the condition that the terminal device 120 is out of sync with the wireless communication system 100, the condition that a Radio Resource Control (RRC) connection is reestablished between the terminal device 120 and the network device 110 in some handover processes of handover of the terminal device 120 between different network devices 110, the condition that the terminal device 120 is switched from an inactive state RRC INACTIVE, or the condition that the terminal device 120 is indicated by other System Information (SI).

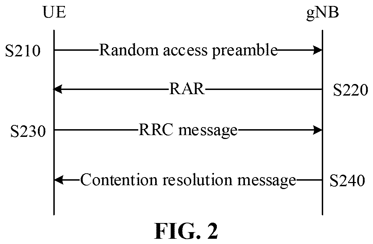

Corresponding to triggering of the RACH process, contention-based RACH is usually implemented by a 4-message procedure in a present related standard or protocol. For example, the wireless communication system 100 is a 5G system, the network device 110 may be a gNB, and the terminal device 120 may be UE. A specific process refers to FIG. 2.

In S210, the UE sends a selected random access preamble on a selected Physical Random Access Channel (PRACH) resource.

It can be understood that, in the operation, the UE may send the random access preamble through a Message 1 (msg1). The gNB, after receiving the msgl, may estimate uplink timing and a size of a grant required by the terminal for transmission of a Message 3 (msg3) based on the preamble.

In S220, the gNB sends a Random Access Response (RAR) to the UE.

It is to be noted that the gNB may send the RAR through a Message 2 (msg2). The UE, after sending the msgl, may enable an RAR window, monitor a Physical Downlink Control Channel (PDCCH) in the RAR window and, after detecting the PDCCH, obtain a Physical Downlink Shared Channel (PDSCH) scheduled by the PDCCH, the RAR is included in the PDSCH. If the UE does not obtain the RAR in the RAR window, the present RACH process fails.

In S230, the UE sends an RRC message.

It is to be noted that the RRC message may be sent through a Message 2 (msg3), and the msg3 is mainly configured to notify an event triggering the RACH process to a network. For example, in case of an initial RACH process, the msg3 may contain a UE Identifier (ID) and an establishment cause. In case of RRC reestablishment, a connected-state UE ID and the establishment cause may be contained.

In addition, a contention may be resolved in S240 through the ID contained in the msg3.

In S240, the gNB feeds back a contention resolution message to the UE.

It can be understood that, in the step, the contention resolution message may be transmitted through a Message 4 (msg4). The msg4 plays two roles in, first, resolving the contention and second, transmitting an RRC configuration message to the UE. For contention resolution, the following two manners may be adopted.

A first manner: if the UE contains a Cell Radio Network Temporary Identifier (C-RNTI) in S230, the msg4 may be scheduled by a PDCCH scrambled through the C-RNTI.

A second manner: if the UE does not contain the C-RNTI in S230, for example, under an initial access condition, the msg4 is scheduled by a PDCCH scrambled through a Temporary C-RNTI (TC-RNTI). The contention is resolved through a PDSCH that the UE receives the msg4, that is, the contention is resolved by matching a Common Control Channel Service Data Unit (CCCH SDU) in the PDSCH.

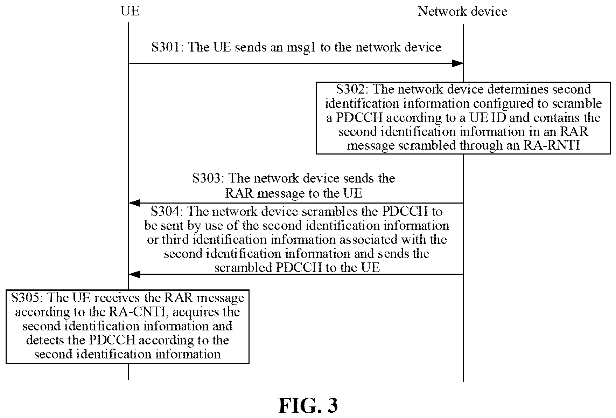

It can be seen from the RACH process shown in FIG. 2 that a delay in the RACH process of the 4-message procedure may be increased, which may bring negative influence to a low-delay service in a 5G system. Therefore, the RACH process of the original 4-message procedure is expected to be implemented through a 2-message procedure at present. Specifically, a potential 2-message procedure that may be implemented may refer to FIG. 3.

In S301, the UE sends an msgl to the network device.

It is to be noted that the msgl may include a preamble, a UE ID and an RRC establishment cause. Specifically, the preamble may be sent through a PRACH resource, and the UE ID and the establishment cause may be sent through an uplink resource such as a PUCCH and a PUSCH. The UE ID is configured to uniquely distinguish the UE, and may include; a 5G System Architecture Evolution (SAE) Temporary Mobile Subscriber Identity (5G-S-TMSI); part of the 5G-S-TMSI; a C-RNTI; the C-RNTI, a Physical Cell Identifier (PCI) and a short Media Access Control Identifier (short MAC I); and a resume ID. The RRC establishment cause may be configured to represent an event triggering RACH, for example, initial access, RRC reestablishment and switching from an inactive state RRC INACTIVE to a connected state RRC-CONNECTED. Elaborations are omitted herein.

In S302, the network device determines second identification information configured to scramble a PDCCH according to a UE ID and contains the second identification information in an RAR message scrambled through a Random Access Radio Network Temporary Identifier (RA-RNTI).

In S303, the network device sends the RAR message to the UE.

In S304, the network device scrambles the PDCCH to be sent by use of the second identification information or third identification information associated with the second identification information and sends the scrambled PDCCH to the UE.

In S305, the UE receives the RAR message according to the RA-CNTI, acquires the second identification information and detects the PDCCH according to the second identification information.

It is to be noted that S303 and S304 may be considered as that the network device sends an msg2 to the UE, and then, when the UE completes detecting the PDCCH through S305, it is indicated completion of the access process of the UE.

For S302 to S304, since the PDCCH is scrambled through the second identification information or the third identification information associated with the third identification information, for resolving the contention, the second identification information may also be an ID configured to uniquely distinguish the UE. Based on this, the second identification information may include any one of: the 5G-S-TMSI; part of the 5G-S-TMSI; the C-RNTI; the C-RNTI, the PCI and the short MAC I; and the resume ID.

It can be seen that an optional range of the second identification information is the same as an optional range of the UE ID. Since the UE may be uniquely distinguished through the information, for example the UE may be uniquely distinguished through the 5G-S-TMSI and the C-RNTI, the content of the second identification information may be different from the content of the UE ID that is sent.

It can be seen from the 2-message RACH procedure that the UE, in the process of sending the msgl, transmits the preamble on the PRACH resource and is further required to transmit the UE ID and the RRC establishment cause on the uplink resource. A size of the UE ID and the RRC establishment cause is determined according to a content required to be transmitted, and then the uplink resource for transmission may be determined. Based on this, determination of the uplink resource applied to transmission of the UE ID and the RRC establishment cause is required to be implemented through the following technical solutions of the embodiments of the application.

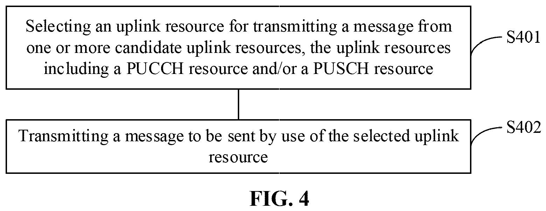

Referring to FIG. 4, an information transmission method provided in an embodiment of the application is shown. The method may be applied to UE such as a terminal device 120 shown in FIG. 1, and may include the following steps.

In S401, an uplink resource for transmitting a message is selected from one or more candidate uplink resources, the uplink resources include a PUCCH resource and/or a PUSCH resource.

In S402, a message to be sent is transmitted by use of the selected uplink resource.

For the technical solution shown in FIG. 4, it is to be noted that the message to be sent may include a UE ID and RRC establishment cause in an msgl, other than a preamble, in the technical solution shown in FIG. 3. Therefore, in the technical solution shown in FIG. 4, the uplink resource is required to be selected and determined at least before S301 in FIG. 3 is executed. Through the technical solution shown in FIG. 4, under the condition that the UE has yet not accessed a network device, a proper uplink resource may be selected to transmit the message to be sent. Therefore, a 2-message RACH procedure shown in FIG. 3 may be implemented, and a delay in a RACH process may be reduced.

For the technical solution shown in FIG. 4, in a possible implementation mode, maximum sizes of messages of which the one or more candidate uplink resources support transmission or carrying are different. This is because the candidate uplink resources are configured by the network device. Therefore, the technical solution shown in FIG. 4 may further include that: a configuration message sent by the network device is received, the configuration message is configured to configure the one or more candidate uplink resources for the UE. It is to be noted that, in a practical application process, for example, for PUSCH resources, the network device may consider that maximum bit sizes of which the PUSCH resources support transmission or carrying are 16, 40, 48 and 64 bits respectively, therefore, maximum sizes of messages of which each of the candidate PUSCH resources, which are capable of being provided by the network device, supports transmission or carrying may be different.

For the configuration message, specifically, the operation that the configuration message sent by the network device is received includes operations that: a system message sent by the network device is received, the system message includes configuration parameters of the one or more candidate uplink resources; or, RRC signaling sent by the network device is received, the RRC signaling includes the configuration parameters of the one or more candidate uplink resources.

For the above specific example, the configuration parameters of the candidate uplink resources may include time-frequency resource positions, modulation and coding schemes and period of the candidate uplink resources.

In addition, the maximum sizes of the messages of which the candidate uplink resources support transmission or carrying may be implicitly indicated by the network device. For example, the configuration parameters of the candidate uplink resources may correspond to maximum sizes of messages of which the candidate uplink resources support transmission or carrying. For example, for the time-frequency resource positions, the time-frequency resource positions of the candidate uplink resources may form correspondence relationships with maximum sizes of messages of which the candidate uplink resources support transmission or carrying. For another example, the network device, when configuring a PRACH resource for the UE, may set correspondence relationships between maximum sizes of messages of which the candidate uplink resources support transmission or carrying and configured PRACH resources, so that the UE, when learning the configured PRACH resource, may learns a maximum size of a message of which the candidate uplink resource supports transmission or carrying. For the PRACH resources and the correspondence relationships, correspondence relationships between maximum sizes of messages of which the candidate uplink resources support transmission or carrying and a PRACH group may be set. Therefore, in a specific implementation process, the operation that the uplink resource for transmitting a message is selected from the one or more candidate uplink resources may include operations that: the selected uplink resource in the candidate uplink resource is determined according to a size of the message to be sent; a PRACH group configured to send a preamble is determined according to the selected uplink resource and the correspondence relationships; and an available PRACH resource in the PRACH group is determined.

For the technical solution shown in FIG. 4, in a possible implementation mode, there is a case that a number of types of the candidate uplink resources is different from a number of different sizes of messages to be sent, the number of the types of the candidate uplink resources is a number of different maximum sizes of messages of which the candidate uplink resources support transmission or carrying.

It is to be noted that, for example, maximum bit sizes of which PUSCH resources support transmission or carrying are 16, 40, 48 and 64 bits respectively, and the size of the message to be sent may also be 16, 40, 48 and 64 bits. Referring to Table 1, RACH-event-based size values of a content of the message to be sent are shown.

**Table 1**

| Cases | RACH event | Msg1 (PRACH+PUSCH) |
|---|---|---|
| Case 1 | Triggering by initial access | The preamble is transmitted on the PRACH; |
| | | the UE ID (39bits)+establishment cause (4bits) are transmitted on the PUSCH |
| Case2 | RRC reestablishment | The preamble is transmitted on the PRACH; |
| | | the C-RNTI (16bits) or the PCI (8bits) or the short MAC I (16bits) or the reestablishment cause (2bits) is transmitted on the PUSCH |
| Case3 | RRC resume | The preamble is transmitted on the PRACH; |
| | | the resume ID (40bits) or the short MAC I (16bits) or the resume cause (4bits) is transmitted on the PUSCH |

However, the network device may also not configure all available PUSCH resources for the UE, and consequently, the number of types of PUSCH resources configured for the UE may be different from the number of the different sizes of the message to be sent. In such case, for the uplink resource selected from the candidate uplink resources by the UE, the condition that the size of the message to be sent is equal to the maximum size of the message of which the selected uplink resource supports transmission or carrying may not occur at a high possibility, and the following two conditions may usually occur, namely the size of the message to be sent is larger than the maximum size of the message of which the selected uplink resource supports transmission or carrying or the size of the message to be sent is smaller than the maximum size of the message of which the selected uplink resource supports transmission or carrying.

For the above conditions, optionally, when the size of the message to be sent is larger than the maximum size of the message of which the selected uplink resource supports transmission or carrying, the operation that the message to be sent is transmitted by use of the selected uplink resource includes operations that: the message to be sent is segmented into a first partial message and a second partial message, a size of the first partial message is the same as the maximum size of the message of which the selected uplink resource supports transmission or carrying and the second partial message contains remaining parts in the message to be sent other than the first partial message; the first partial message is sent through the selected uplink resource; an uplink resource scheduled by the network device is received; and the second partial message is transmitted through the scheduled uplink resource.

Specifically, if the size of the message to be sent is larger than the maximum size of the message of which the selected uplink resource supports transmission or carrying, the message to be sent may be segmented according to the maximum size of the message of which the selected uplink resource supports transmission or carrying, a size of a part of the message to be sent is matched with the maximum size of the message of which the selected uplink resource supports transmission or carrying, so that this part may be transmitted through the selected uplink resource, and the remaining parts may be transmitted through another uplink resource subsequently scheduled by the network device. In addition, the UE may also segment the message to be sent according to a size configured by the network device, and two parts obtained by segmentation may be transmitted through the selected uplink resource and the other uplink resource subsequently scheduled by the network device.

For the above conditions, optionally, when the size of the message to be sent is larger than the maximum size of the message of which the selected uplink resource supports transmission or carrying, the operation that the message to be sent is transmitted by use of the selected uplink resource includes operations that: the message to be sent is segmented into the first partial message and the second partial message, the size of the first partial message is the same as the maximum size of the message of which the selected uplink resource supports transmission or carrying and the second partial message contains the remaining parts in the message to be sent, other than the first partial message; the first partial message is sent through the selected uplink resource; and in a case that the selected uplink resource is one of the PUCCH resource and the PUSCH resource, the second partial message is sent through the other uplink resource than the selected uplink resource, in the PUCCH resource and the PUSCH resource.

Specifically, the uplink resource through which the message to be sent may be sent may be the PUCCH resource or may also be the PUSCH resource. If the selected uplink resource is the PUCCH resource, the UE may perform segmentation according to the maximum size of the message of which the PUCCH resource supports transmission or carrying, a size of a part of the message is matched with the maximum size of the message of which the PUCCH resource supports transmission or carrying, so that this part may be transmitted through the selected PUCCH resource, and the other part may be transmitted through the PUSCH resource. By contrast, if the selected uplink resource is the PUSCH resource, the UE may perform segmentation according to the maximum size of the message of which the PUSCH resource supports transmission or carrying, a size of a part of the message is matched with the maximum size of the message of which the selected PUSCH resource supports transmission or carrying, so that this part may be transmitted through the selected PUSCH resource, and the other part may be transmitted through the PUCCH resource.

Both the above two optional examples are described for the condition that the size of the message to be sent is larger than the maximum size of the message of which the selected uplink resource supports transmission or carrying. The other condition that the size of the message to be sent is smaller than the maximum size of the message of which the selected uplink resource supports transmission or carrying also exists. For this condition, optionally, for improving the transmission efficiency of the resource, in a case that the size of the message to be sent is smaller than the maximum size of the message of which the selected uplink resource supports transmission or carrying, besides the operation that the message to be sent is transmitted by use of the selected uplink resource, the method further includes the following operation.

At least one of the following information is transmitted through remaining parts of the selected uplink resource: a padding, a padding Buffer Status Report (BSR), a regular BSR, a Power Headroom Report (PHR) or data.

It can be understood that, since a PUCCH may usually not be configured to transmit service data, if the information that the remaining resource is configured to transmit includes the data, the selected uplink resource may be the PUSCH resource, and if the information that the remaining resource is configured to transmit does not include the data, the selected uplink resource may be the PUSCH resource or the PUCCH resource.

Through the information transmission method provided in the embodiment, under the condition that the UE has yet not accessed the network device, the proper uplink resource may be selected to transmit the message to be sent. Therefore, the 2-message RACH procedure is implemented, and the delay in the RACH process is reduced.

Based on the same application concept of the abovementioned embodiment, the technical solution of the abovementioned embodiment is elaborated in the present embodiment through the following specific examples. In the following specific examples, the uplink resource is, for example, a PUSCH resource. It can be understood that those skilled in the art may apply the following specific examples to the condition that the uplink resource is a PUCCH resource according to the technical solution of the abovementioned embodiment. Elaborations are omitted herein.

### A first specific example

In the specific example, events triggering RACH may be classified according to a size of an msgl, specifically as follows.

1: For initial RACH, the size of the msgl is 40bit or 48bit, which is determined by whether to transmit an establishment cause on a PUSCH resource or not.

2: For RRC reestablishment, including handover of contention-based Beam Failure Recovery (BFR) and contention-based RACH, the size of the msgl is 16bit (the condition of only containing a C-RNTI) or 48bit.

3: For RRC resume, the size of the msgl is 40bit (the condition of only containing a resume ID) or 64bit.

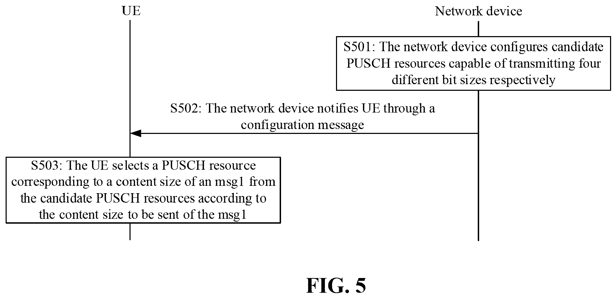

For the abovementioned classes, a network device, when configuring the PUSCH resource, may consider that bits of information that is capable of being transmitted by the PUSCHs are 16, 40, 48 and 64 bits. In such case, referring to FIG. 5, the specific example may include the following steps.

In S501, the network device configures candidate PUSCH resources capable of transmitting four different maximum bit sizes respectively.

In S502, the network device notifies UE through a configuration message.

Specifically, the configuration message may be a system broadcast message or RRC dedicated configuration signaling.

In addition, the configuration message may also be configured to notify time/frequency-domain resources where the candidate PUSCHs are located and/or correspondence relationships between candidate PUSCH resources and PRACH resources to the UE.

In S503, the UE selects a PUSCH resource corresponding to the content size of the msgl to be sent from the candidate PUSCH resources according to the content size of the msgl.

For S503, optionally, the UE may select a PUSCH resource according to the content size of the msgl and the candidate PUSCH resources configured in the configuration message, or may also select a PUSCH resource and a PRACH resource corresponding to the selected PUSCH resource and configured to transmit a preamble according to the content size of the msgl and the correspondence relationships between the candidate PUSCH resources and the PRACH resources.

### A second specific example

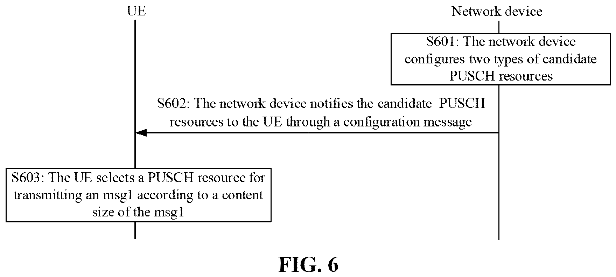

A network device may also configure PUSCH resources of limited types and set that an msgl may have four content sizes, i.e., 16bits, 40bits, 48bits and 64bits. For this condition, referring to FIG. 6, the specific example includes the following steps.

In S601, the network device configures two types of candidate PUSCH resources.

For example, the candidate PUSCH resources only include a PUSCH#1 capable of transmitting or carrying 48bits and a PUSCH#2 capable of transmitting or carrying 64bits.

In S602, the network device notifies the candidate PUSCH resources to the UE through a configuration message.

It can be understood that a specific form of the configuration message may be the same as that of the configuration message in the first specific example and will not be elaborated herein.

In S603, the UE selects a PUSCH resource for transmitting the msgl according to the content size of the msg1.

Since the msgl has the four content sizes and maximum sizes of messages of which the candidate PUSCH resources support transmission or carrying only include 48bits and 64bits, there may be the following three conditions in the process that the UE selects a PUSCH resource for transmitting the msgl from the candidate PUSCH resources and transmits a content of the msgl by use of the selected PUSCH resource.

### A first condition

The maximum size of the message of which the selected PUSCH resource supports transmission or carrying is matched with the content size of the msgl to be sent. For this condition, the process may be implemented with reference to the solution in the first specific example and will not be elaborated herein.

### A second condition

The maximum size of the message of which the selected PUSCH resource supports transmission or carrying is smaller than the content size of the msgl to be sent. For this condition, the UE may select a segmentation manner for processing. An optional implementation process of the manner is as follows.

The UE segments the msgl according to the maximum size of the message of which the selected PUSCH resource supports transmission or carrying, to segment the msgl into two parts, a size of one part is matched with the maximum size of the message of which the selected PUSCH resource supports transmission or carrying, so that this part may be transmitted through the selected PUSCH resource, and the other part may be transmitted through another uplink resource subsequently scheduled by the network device.

In addition, for this manner, there is another optional implementation mode. That is, the UE may also segment the message to be sent according to a size configured by the network device, and two parts obtained by segmentation may be transmitted through the selected uplink resource and the other uplink resource subsequently scheduled by the network device respectively.

### A third condition

The maximum size of the message of which the selected PUSCH resource supports transmission or carrying is larger than the content size of the msgl to be sent. For this condition, after the UE transmits or carries the msgl through the selected PUSCH resource, there is some remaining idle resources. For improving the transmission efficiency and the utilization rate of the resource, it can be understood that the UE may transmit at least one of the following information on the remaining idle resources: a padding, a padding BSR, a regular BSR, a PHR or data.

Through the two specific examples of the embodiment, specific implementation of the technical solution of the abovementioned embodiment is elaborated. It can be seen that, according to the technical solution of the embodiments of the application, under the condition that the UE has yet not accessed the network device, the proper uplink resource is selected to transmit the message to be sent. Therefore, the 2-message RACH procedure is implemented, and the delay in the RACH process is reduced.

### Embodiment 3

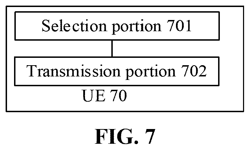

Based on the same application concept of the abovementioned embodiments, referring to FIG. 7, UE 70 provided in an embodiment of the application is shown. The UE 70 includes a selection portion 701 and a transmission portion 702. The selection portion 701 is configured to select an uplink resource for transmitting a message from one or more candidate uplink resources, the uplink resources includes a PUCCH resource and/or a PUSCH resource.

The transmission portion 702 is configured to transmit a message to be sent by use of the selected uplink resource.

In an optional embodiment of the application, maximum sizes of messages of which the one or more candidate uplink resources support transmission or carrying are different.

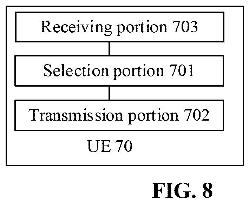

In an optional embodiment of the application, referring to FIG. 8, the UE 70 further includes a receiving portion 703, configured to receive a configuration message sent by a network device, the configuration message includes the one or more candidate uplink resources configured for the UE.

In an optional embodiment of the application, the receiving portion 703 is configured to receive a system message sent by the network device, the system message includes configuration parameters of the one or more candidate uplink resources, or, receive RRC signaling sent by the network device, the RRC signaling includes the configuration parameters of the one or more candidate uplink resources.

In an optional embodiment of the application, the configuration parameters includes a time-frequency resource position, modulation and coding scheme and period of the candidate uplink resources, the time-frequency resource positions have correspondence relationships with the maximum sizes of the messages of which the candidate uplink resources support transmission or carrying .

In an optional embodiment of the application, the maximum sizes of the messages of which the candidate uplink resources support transmission or carrying have correspondence relationships with configured PRACH resources.

In an optional embodiment of the application, the maximum sizes of the messages of which the candidate uplink resources support transmission or carrying have correspondence relationships with PRACH groups.

In an optional embodiment of the application, the selection portion 701 is configured to determine the selected uplink resource from the candidate uplink resource according to a size of a message to be sent, determine a PRACH group for transmitting a preamble according to the selected uplink resource and the correspondence relationships and determine an available PRACH resource from the PRACH group.

In an optional embodiment of the application, there is a case that a number of types of the candidate uplink resources is different from a number of different sizes of the messages to be sent, the number of the types of the candidate uplink resources is a number of different maximum sizes of messages of which the candidate uplink resources support transmission or carrying.

In an optional embodiment of the application, in a case that a size of a message to be sent is larger than a maximum size of a message of which the selected uplink resource supports transmission or carrying, the transmission portion 702 is configured to segment the message to be sent into a first partial message and a second partial message, a size of the first partial message is the same as the maximum size of the message of which the selected uplink resource supports transmission or carrying and the second partial message contains remaining parts in the message to be sent, other than the first partial message, transmit the first partial message through the selected uplink resource, receive an uplink resource scheduled by the network device and transmit the second partial message through the scheduled uplink resource.

In an optional embodiment of the application, in a case that the size of the message to be sent is larger than the maximum size of the message of which the selected uplink resource supports transmission or carrying, the transmission portion 702 is configured to segment the message to be sent is segmented into the first partial message and the second partial message, the size of the first partial message is the same as the maximum size of the message of which the selected uplink resource supports transmission or carrying and the second partial message contains remaining parts in the message to be sent, other than the first partial message, send the first partial message through the selected uplink resource and, in a case that the selected uplink resource is one of the PUCCH resource and the PUSCH resource, send the second partial message through the other uplink resource than the selected uplink resource, in the PUCCH resource and the PUSCH resource.

In an optional embodiment of the application, in a case that the size of the message to be sent is smaller than the maximum size of the message of which the selected uplink resource supports transmission or carrying, the transmission portion 702 is further configured to transmit at least one of the following information through remaining parts of the selected uplink resource: a padding, a padding BSR, a regular BSR, a PHR or data.

It can be understood that, in the embodiment, "portion" may be part of a circuit, part of a processor, part of a program or software and the like, of course, may also be a unit, and may also be modular and non-modular.

In addition, each component in the embodiment may be integrated into a processing unit, each unit may also exist independently, and two or more than two units may also be integrated into a unit. The integrated unit may be implemented in a hardware form and may also be implemented in form of software function module.

When implemented in form of software function module and sold or used not as an independent product, the integrated unit may be stored in a computer-readable storage medium. Based on such an understanding, the technical solution of the embodiment substantially or parts making contributions to the conventional art or all or part of the technical solution may be embodied in form of software product, and the computer software product is stored in a storage medium, including a plurality of instructions configured to enable a computer device (which may be a personal computer, a server, a network device or the like) or a processor to execute all or part of the steps of the method in the embodiment. The storage medium includes: various media capable of storing program codes such as a U disk, a mobile hard disk, a Read-Only Memory (ROM), a Random Access Memory (RAM), a magnetic disk or an optical disk.

Therefore, the embodiment provides a computer storage medium, which stores an information transmission program, the information transmission program being executed by at least one processor to implement the steps of the information transmission method in embodiment 1.

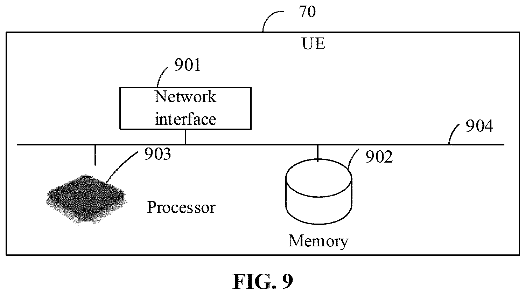

Based on the UE 70 and the computer storage medium, referring to FIG. 9, a specific hardware structure of the UE 70 provided in the embodiment of the application is shown, and may include a network interface 901, a memory 902 and a processor 903. Each component is coupled together through a bus system 904. It can be understood that the bus system 904 is configured to implement connection communication between these components. The bus system 904 includes a data bus and further includes a power bus, a control bus and a state signal bus. However, for clear description, various buses in FIG. 9 are marked as the bus system 904. The network interface 901 is configured to receive and send a signal in a process of receiving and sending information with another external network element.

The memory 902 is configured to store a computer program capable of running in the processor 903.

The processor 903 is configured to run the computer program to execute the operations of selecting an uplink resource for transmitting a message from one or more candidate uplink resources, the uplink resources includes a PUCCH resource and/or a PUSCH resource, and transmitting a message to be sent by use of the selected uplink resource.

It can be understood that the memory 902 in the embodiment of the application may be a volatile memory or a nonvolatile memory, or may include both the volatile and nonvolatile memories. The nonvolatile memory may be a ROM, a Programmable ROM (PROM), an Erasable PROM (EPROM), an Electrically EPROM (EEPROM) or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). It is to be noted that the memory 902 of a system and method described in the disclosure is intended to include, but not limited to, memories of these and any other proper types.

The processor 903 may be an integrated circuit chip with a signal processing capability. In an implementation process, each step of the method may be completed by an integrated logic circuit of hardware in the processor 903 or an instruction in a software form. The processor 903 may be a universal processor, a Digital Signal Processor (DSP), an Application Specific Integrated Circuit (ASIC), a Field Programmable Gate Array (FPGA) or another Programmable Logic Device (PLD), discrete gate or transistor logical device and discrete hardware component. Each method, step and logical block diagram disclosed in the embodiments of the application may be implemented or executed. The universal processor may be a microprocessor or the processor may also be any conventional processor and the like. The steps of the method disclosed in combination with the embodiments of the application may be directly embodied to be executed and completed by a hardware decoding processor or executed and completed by a combination of hardware and software modules in the decoding processor. The software module may be located in a mature storage medium in this field such as a RAM, a flash memory, a ROM, a PROM or EEPROM and a register. The storage medium is located in the memory 902. The processor 903 reads information in the memory 902 and completes the steps of the method in combination with hardware.

It can be understood that these embodiments described in the disclosure may be implemented by hardware, software, firmware, middleware, a microcode or a combination thereof. In case of implementation with the hardware, the processing unit may be implemented in one or more ASICs, DSPs, DSP Devices (DSPDs), PLDs, FPGAs, universal processors, controllers, microcontrollers, microprocessors, other electronic units configured to execute the functions in the application or combinations thereof.

In case of implementation with the software, the technology of the disclosure may be implemented through the modules (for example, processes and functions) executing the functions in the disclosure. A software code may be stored in the memory and executed by the processor. The memory may be implemented in the processor or outside the processor.

Specifically, the processor 903 in the UE 70 is further configured to run the computer program to execute the steps of the method in embodiment 1. Elaborations are omitted herein.

The above is only the preferred embodiment of the application and not intended to limit the scope of protection of the application.

## Claims

1. An information transmission method, applied to User Equipment (UE) and comprising:
selecting an uplink resource for transmitting a message from one or more candidate uplink resources, the uplink resources comprising at least one of a Physical Uplink Control Channel (PUCCH) resource or a Physical Uplink Shared Channel (PUSCH) resource; and
transmitting a message to be sent by use of the selected uplink resource.

2. The method of claim 1, wherein maximum sizes of messages of which the one or more candidate uplink resources support transmission or carrying are different.

3. The method of claim 1, further comprising:
receiving a configuration message sent by a network device, the configuration message being used to configure the one or more candidate uplink resources for the UE.

4. The method of claim 3, wherein receiving the configuration message sent by the network device comprises:
receiving a system message sent by the network device, the system message comprises configuration parameters of the one or more candidate uplink resources; or,
receiving Radio Resource Control (RRC) signaling sent by the network device, the RRC signaling comprises configuration parameters of the one or more candidate uplink resources.

5. The method of claim 4, wherein the configuration parameters comprise time-frequency resource positions, modulation and coding schemes and period of the candidate uplink resources, the time-frequency resource positions have correspondence relationships with maximum sizes of messages of which the candidate uplink resources support transmission or carrying.

6. The method of claim 2, wherein the maximum sizes of the messages of which the candidate uplink resources support transmission or carrying have correspondence relationships with configured Physical Random Access Channel (PRACH) resources.

7. The method of claim 6, wherein the maximum sizes of the messages of which the candidate uplink resources support transmission or carrying have correspondence relationships with PRACH groups.

8. The method of claim 7, wherein selecting the uplink resource for transmitting the message from the one or more candidate uplink resources comprises:
determining, according to a size of the message to be sent, the selected uplink resource from the candidate uplink resources;
determining, according to the selected uplink resource and the correspondence relationships, a PRACH group for transmitting a preamble; and
determining an available PRACH resource from the PRACH group.

9. The method of claim 1, wherein there is a case that a number of types of the candidate uplink resources is different from a number of different sizes of messages to be sent, the number of the types of the candidate uplink resources is a number of different maximum sizes of messages of which the candidate uplink resources support transmission or carrying.

10. The method of claim 9, wherein, in a case that a size of a message to be sent is larger than a maximum size of a message of which the selected uplink resource supports transmission or carrying, transmitting the message to be sent by use of the selected uplink resource comprises:
segmenting the message to be sent into a first partial message and a second partial message, wherein a size of the first partial message is the same as the maximum size of the message of which the selected uplink resource supports transmission or carrying and the second partial message contains remaining parts in the message to be sent, other than the first partial message;
transmitting the first partial message through the selected uplink resource;
receiving an uplink resource scheduled by the network device; and
transmitting the second partial message through the scheduled uplink resource.

11. The method of claim 9, wherein, in a case that a size of a message to be sent is larger than a maximum size of a message of which the selected uplink resource supports transmission or carrying, transmitting the message to be sent by use of the selected uplink resource comprises:
segmenting the message to be sent into the first partial message and the second partial message, wherein the size of the first partial message is the same as the maximum size of the message of which the selected uplink resource supports transmission or carrying and the second partial message contains remaining parts in the message to be sent, other than the first partial message;
transmitting the first partial message through the selected uplink resource; and
in a case that that the selected uplink resource is one of the PUCCH resource or the PUSCH resource, transmitting the second partial message through the other uplink resource than the selected uplink resource, in the PUCCH resource and the PUSCH resource.

12. The method of claim 9, wherein, in a case that a size of a message to be sent is smaller than a maximum size of a message of which the selected uplink resource supports transmission or carrying, besides transmitting the message to be sent by use of the selected uplink resource, the method further comprises:
transmitting at least one of the following information through remaining parts of the selected uplink resource:
a padding, a padding Buffer Status Report (BSR), a regular BSR, a Power Headroom Report (PHR) or data.

13. User Equipment (UE), comprising a selection portion and a transmission portion, wherein
the selection portion is configured to select an uplink resource for transmitting a message from one or more candidate uplink resources, the uplink resources comprises at least one of a Physical Uplink Control Channel (PUCCH) resource or a Physical Uplink Shared Channel (PUSCH) resource; and
the transmission portion is configured to transmit a message to be sent by use of the selected uplink resource.

14. The UE of claim 13, wherein maximum sizes of messages of which the one or more candidate uplink resources support transmission or carrying are different.

15. The UE of claim 13, further comprising:
a receiving portion, configured to receive a configuration message sent by a network device, the configuration message comprising the one or more candidate uplink resources configured for the UE.

16. The UE of claim 15, wherein the receiving portion is configured to:
receive a system message sent by the network device, the system message comprises configuration parameters of the one or more candidate uplink resources; or,
receive Radio Resource Control (RRC) signaling sent by the network device, the RRC signaling comprises configuration parameters of the one or more candidate uplink resources.

17. The UE of claim 16, wherein the configuration parameters comprise a time-frequency resource positions, modulation and coding schemes and period of the candidate uplink resources, the time-frequency resource positions have correspondence relationships with maximum sizes of messages of which the candidate uplink resources support transmission or carrying.

18. The UE of claim 14, wherein the maximum sizes of the messages of which the candidate uplink resources support transmission or carrying have correspondence relationships with configured Physical Random Access Channel (PRACH) resources.

19. The UE of claim 18, wherein the maximum sizes of the messages of which the candidate uplink resources support transmission or carrying have correspondence relationships with PRACH groups.

20. The UE of claim 19, wherein the selection portion is configured to determine the selected uplink resource from the candidate uplink resources according to a size of the message to be sent, determine a PRACH group for transmitting a preamble according to the selected uplink resource and the correspondence relationships and determine an available PRACH resource from the PRACH group.

21. The UE of claim 13, wherein there is a case that a number of types of the candidate uplink resources is different from a number of different sizes of messages to be sent, the number of the types of the candidate uplink resources is a number of different maximum sizes of messages of which the candidate uplink resources support transmission or carrying.

22. The UE of claim 21, wherein, in a case that a size of a message to be sent is larger than a maximum size of a message of which the selected uplink resource supports transmission or carrying, the transmission portion is configured to:
segment the message to be sent into a first partial message and a second partial message, wherein a size of the first partial message is the same as the maximum size of the message of which the selected uplink resource supports transmission or carrying and the second partial message contains remaining parts in the message to be sent, other than the first partial message;
transmit the first partial message through the selected uplink resource;
receive an uplink resource scheduled by the network device; and
transmit the second partial message through the scheduled uplink resource.

23. The UE of claim 21, wherein, in a case that a size of a message to be sent is larger than a maximum size of a message of which the selected uplink resource supports transmission or carrying, the transmission portion is configured to:
segment the message to be sent into the first partial message and the second partial message, wherein the size of the first partial message is the same as the maximum size of the message of which the selected uplink resource supports transmission or carrying and the second partial message contains remaining parts in the message to be sent, other than the first partial message;
send the first partial message through the selected uplink resource; and
in a case that the selected uplink resource is one of the PUCCH resource or the PUSCH resource, transmit the second partial message through the other uplink resource than the selected uplink resource, in the PUCCH resource and the PUSCH resource.

24. The UE of claim 21, wherein, in a case that a size of a message to be sent is smaller than a maximum size of a message of which the selected uplink resource supports transmission or carrying, the transmission portion is further configured to transmit at least one of the following information through remaining parts of the selected uplink resource: a padding, a padding Buffer Status Report (BSR), a regular BSR, a Power Headroom Report (PHR) or data.

25. User Equipment (UE), comprising a network interface, a memory and a processor, wherein
the network interface is configured to receive and send a signal in a process of receiving and sending information with another external network element;
the memory is configured to store computer programs capable of running in the processor; and
the processor is configured to run the computer programs to execute the steps of the method of any one of claims 1-12.

26. A computer storage medium, storing information transmission programs, the information transmission programs being executed by at least one processor to implement the steps of the information transmission method of any one of claims 1-12.
